(19) Europäisches Patentamt

European Patent Office

Office européen des brevets

(11) Veröffentlichungsnummer : **0 089 567**
**B1**

(12) **EUROPÄISCHE PATENTSCHRIFT**

(45) Veröffentlichungstag der Patentschrift :
07.05.86

(21) Anmeldenummer : 83102386.6

(22) Anmeldetag : 11.03.83

(51) Int. Cl.⁴ : **G 05 D 23/24**

(54) **Sollwertgeber für einen Temperaturregler.**

(30) Priorität : 20.03.82 DE 8208265 U

(43) Veröffentlichungstag der Anmeldung :
28.09.83 Patentblatt 83/39

(45) Bekanntmachung des Hinweises auf die Patenterteilung : 07.05.86 Patentblatt 86/19

(84) Benannte Vertragsstaaten :
**AT BE CH DE FR GB IT LI LU NL SE**

(56) Entgegenhaltungen :
**CH-A- 374 175**
**FR-A- 2 077 153**
**FR-A- 2 245 024**

(73) Patentinhaber : Joh. Vaillant GmbH u. Co.
Berghauser Strasse 40 Postfach 10 10 20
D-5630 Remscheid 1 (DE)
DE IT LU SE
COFRABEL N.V.
Goldenhopestraat 15
B-1620 Drogenbos (BE)
BE
VAILLANT S.A.R.L
4, Rue des Oliviers Orly-Sénia 326
F-94537 Rungis Cedex (FR)
FR
VAILLANT Ges.m.b.H
Forchheimergasse 7 Postfach 56
A-1233 Wien (AT)
AT
Vaillant Ltd.
Vaillant Building, Aerodrome Way Heston Industrial
Estate
GB-Hounslow, Middx. TW5 9QB (GB)
GB
SCHONEWELLE B.V.
Ellermanstraat 17
NL-1099 BX Amsterdam (NL)
NL
Vaillant GmbH
Riedstrasse 8
CH-8953 Dietikon 1 (CH)
CH LI

(72) Erfinder : Sieg, Reinhard
Bergisch Born 106 B
D-5630 Remscheid - 11 (DE)

(74) Vertreter : Heim, Johann-Ludwig
c/o Joh. Vaillant GmbH u. Co Postfach 10 10 20
Berghauser Strasse 40
D-5630 Remscheid 1 (DE)

**Beschreibung**

Die vorliegende Erfindung bezieht sich auf einen Sollwertgeber für einen Temperaturregler gemäß dem Oberbegriff des Hauptanspruchs.

Es sind Vorlauftemperaturregler für Wärmequellen zentral beheizter Sammelheizungen bekanntgeworden, bei denen der Sollwert in Abhängigkeit der Außentemperatur gleitend vorgegeben wird, und zwar nach Art einer sogenannten Heizkurve. Hier erfolgt eine selbsttätige Sollwertvorgabe, wobei die Änderung der Vorlauftemperatur linear proportional zur Außentemperatur vorgenommen wird. Derartige Heizkurven-Sollwertgeber besitzen Verstellmöglichkeiten für die Heizkurve, indem diese sowohl parallel zu sich verschoben werden kann als auch in ihrer Steilheit geändert, das heißt gedreht werden kann.

Durch die Parallelverschiebung und die Drehung der Heizkurve kann der Sollwert-Geber des Reglers an die unterschiedlichsten Anwendungsfälle angepaßt werden. Beispielsweise kann man hier Eigenheiten des Gebäudes, der Heizungsanlage sowie dem Klimagebiet des Aufstellungsortes Rechnung tragen.

Diese bekannte Möglichkeit, vergleiche DE-A-2004233, hat aber den Nachteil, daß eine empirische Entwicklung der Heizkurve für jeden Anwendungsfall und Aufstellungsort notwendig ist. Das heißt in der Praxis, daß der Installateur der Heizungsanlage nach seinem Wissen eine ungefähre Einstellung der Heizkurve vornimmt, die dann mehr oder weniger häufig zu korrigieren ist.

Der vorliegenden Erfindung liegt die Aufgabe zugrunde, dem Betreiber der Heizungsanlage beziehungsweise dem Installateur eine Sollwertgeber-Einstellmöglichkeit vorzugeben, wobei anhand normierter Größen die Heizkurve exakt nach Maßgabe der vorgenommenen Wärmebedarfsberechnung eingestellt werden kann, wobei also ein Experimentieren zum Finden der richtigen Lage der Heizkurve vermieden werden kann.

Die Lösung dieser Aufgabe gelingt mit den kennzeichnenden Merkmalen des Hauptanspruchs.

Besonders vorteilhafte Ausgestaltungen und Weiterbildungen der Erfindung gehen aus den Unteransprüchen sowie der nachfolgenden Beschreibung hervor, die ein Ausführungsbeispiel der Erfindung anhand der Figuren 1 bis 3 der Zeichnung näher erläutert.

Es zeigen
Figur 1 ein Prinzipschaltbild nach der Erfindung,
Figur 2 und 3 Diagramme.

In allen drei Figuren bedeuten gleiche Bezugszeichen jeweils die gleichen Einzelheiten.

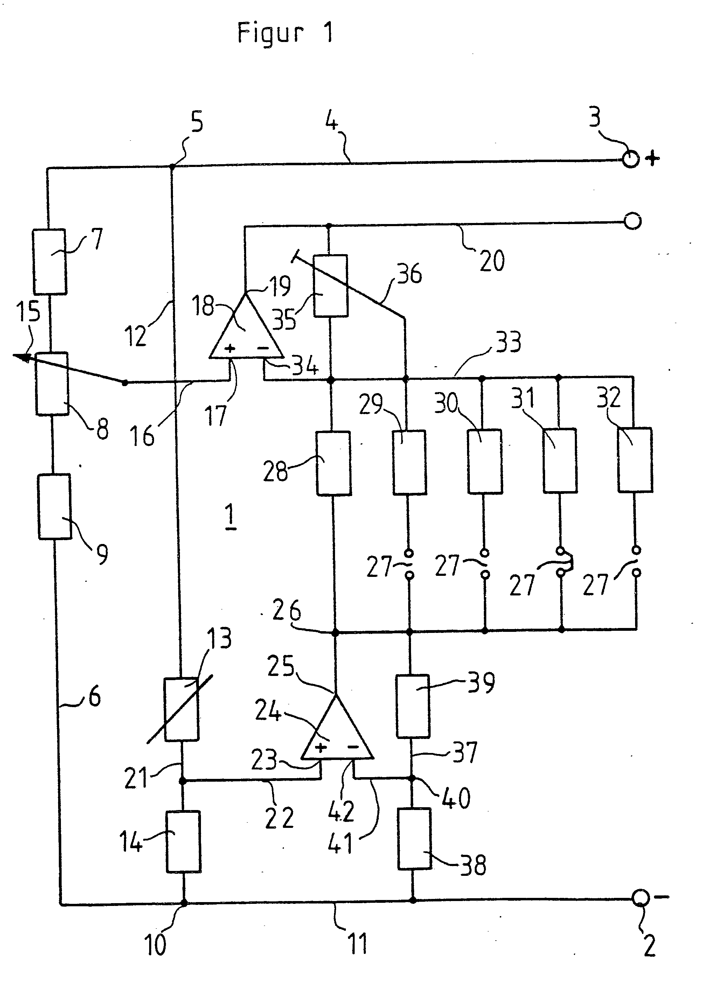

Eine Schaltung 1 gemäß Figur 1 stellt einen Sollwertgeber für den Regler einer Heizungsanlage dar, der mit seinen Klemmen 2 und 3 an negative beziehungsweise positive Betriebsspannung angeschlossen ist. Vom Anschluß 3 führt eine Leitung 4 zu einem Verzweigungspunkt 5, von dem ein erster Brückenast 6, der aus einer Reihenschaltung eines Festwertwiderstandes 7, eines Potentiometers 8 und eines weiteren Festwertwiderstandes 9 besteht, zu einem weiteren Verzweigungspunkt 10 führt, der über eine Verbindungsleitung 11 mit der Klemme 2 verbunden ist. Der zweite Brückenast 12 besteht aus der Serienschaltung eines Temperaturfühlerwiderstandes 13 und eines Festwertwiderstandes 14, der Ast wird an die Verzweigungspunkte 5 und 10 parallel zu dem Ast 6 angeschlossen. Der Fühlerwiderstand 13 ist ein Widerstand mit negativem Temperaturkoeffizienten.

Ein Schleifer 15 des Potentiometers 8 ist über eine Leitung 16 an den nicht invertierenden Pol 17 des Eingangs eines Verstärkers 18 angeschlossen, dessen Ausgang 19 über eine Leitung 20 an einen Eingang des nachgeschalteten Reglers angeschlossen ist.

Von einer Verbindungsleitung 21 zwischen dem Fühlerwiderstand 13 und dem Festwertwiderstand 14 führt eine Leitung 22 zum nicht invertierenden Eingang 23 eines weiteren Verstärkers 24, dessen Ausgang 25 an eine Leitungsverzweigung 26 angeschlossen ist, an die eine Vielzahl von Festwertwiderständen parallel durch Einfügen je einer Kontaktbrücke 27 anschließbar ist. Die einzelnen Widerstände 28, 29, 30, 31 und 32 stellen Festwertwiderstände unterschiedlicher Größen dar, die mit ihren anderen Polen an einer Leitungsverzweigung 33 fest angeschlossen sind, wobei die Leitungsverzweigung 33 zum invertierenden Eingang 34 des Verstärkers 18 führt. Die Verstärkerstrecke vom invertierenden Eingang 34 zum Ausgang 19 überbrückt einen Trimmwiderstand 35, der einerseits an die Leitung 20, andererseits an die Leitung 33 angeschlossen ist. Sein Schleifer 36 ist gleichermaßen an die Leitung 33 angeschlossen.

Von der Leitung 11 führt eine Leitung 37 zur Leitungsverzweigung 26, in die Leitung 37 sind zwei Festwertwiderstände 38 und 39 eingefügt, der Verbindungspunkt 40 beider Widerstände ist über Leitung 41 mit dem invertierenden Eingang 42 des Verstärkers 24 verbunden.

Zwischen den beiden Leitungsverzweigungen 26 und 33 ist regelmäßig der Widerstand 28 angeschlossen. Bei Einfügen jeweils einer der Kontaktbrücken 27 kann zusätzlich einer der Widerstände 29 bis 32 dem Widerstand 28 parallel geschaltet werden, so daß der Gesamtwiderstand zwischen dem Ausgang 25 des Verstärkers 24 und dem invertierenden Eingang 34 des Verstärkers 18 in Stufen variiert werden kann.

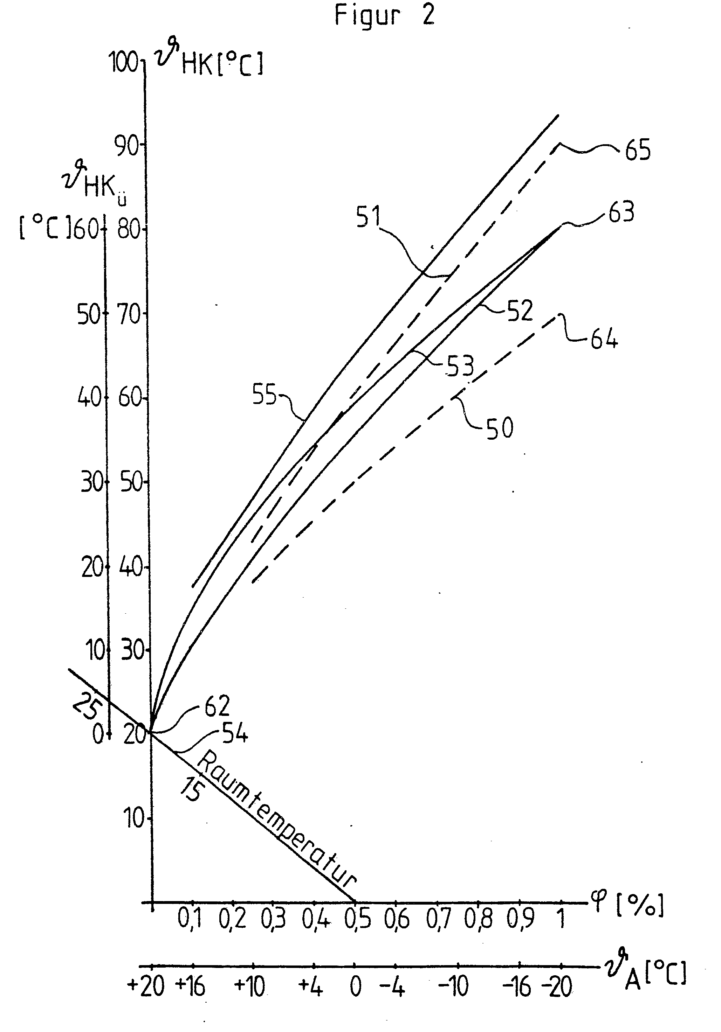

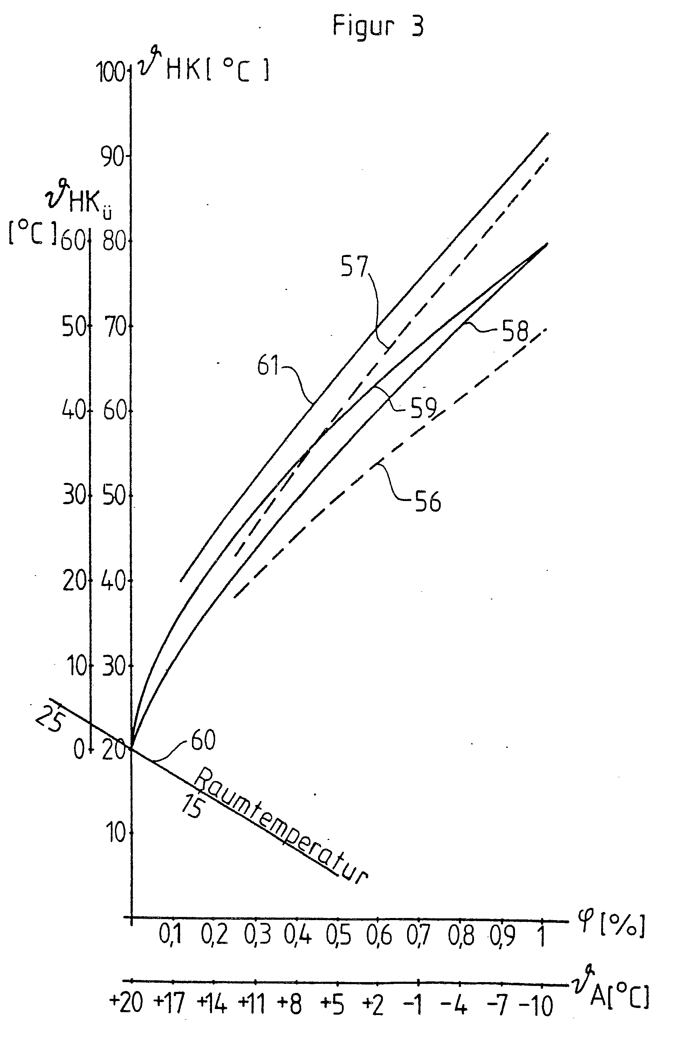

Die gemäß Figur 1 beschriebene Schaltung weist folgende Funktionen auf, die anhand der Diagramme gemäß Figuren 2 und 3 dargestellt werden: In der Figur 2 ist auf der Abszisse die relative Belastung der Heizungsanlage von null bis eins dargestellt, wobei dieser relativen Belastung bestimmte Werte der Außentemperatur zugeordnet sind. Im dargestellten Beispiel ist also davon ausgegangen worden, daß einer Außentemperatur von — 20 °C die Maximalleistung der Heizungsanlage zugeordnet ist, während eine Leistung von 10 Prozent der Anlage bei einer Außentemperatur von + 16° erfolgt. Die Zusammenhänge zwischen Anlagenbelastung und Außentemperatur können als linear proportional angesehen werden.

Auf der Ordinate ist einmal die mittlere Heizkörperübertemperatur in °C angegeben und zum zweiten die mittlere Heizkörpertemperatur gleichfalls in °C.

Es wird weiterhin davon ausgegangen, daß durch die Heizkörper der Sammelheizungsanlage ein bestimmter Wasserdurchsatz erfolgt, der frei wählbar, aber dann vorgegeben ist. Eine Androsselung dieses Durchsatzes durch Thermostatventile entfällt bei diesen Überlegungen einstweilen. Somit ergibt sich bei Verwendung von Radiatoren als Heizkörper die Kurve 52, die, ausgehend von dem Punkt 62, bis zum Punkt 63 verläuft. Der Punkt 62 ergibt sich daraus, daß bei einer gewünschten Raumsolltemperatur von beispielsweise 20° die Vorlauftemperatur diesen Wert nicht überschreiten darf. Die mittlere Heizkörperübertemperatur muß gegenüber der Raumtemperatur null sein, die mittlere Heizkörpertemperatur darf folglich die Raumtemperatur nicht übersteigen. Der Punkt 63 ergibt sich dadurch, daß man einer nach DIN 4701 festgelegten tiefsten Außentemperatur die maximale Belastung der Heizungsanlage zuordnet. Der Krümmungsverlauf der Kurve 52 zwischen beiden Punkten ergibt sich aus der Charakteristik der Heizkörper.

Die Kurve 53 liegt gleichermaßen zwischen den Punkten 62 und 63 und ergibt sich dann, wenn als Heizkörper Konvektoren gewählt werden. Zwischen den Kurven 50 und 51, die der sich bei Beheizung mit Radiatoren ergebenden Kurve 52 zugeordnet sind, liegt also regelmäßig die Kurve 52. Die Punkte 64 und 65 ergeben sich hierbei dadurch, daß die maximal höchste Vorlauf- und Rücklauftemperatur bei voller Belastung der Heizungsanlage vorgegeben wird, was zu den Auslegedaten der Anlage gehört. Der Abstand zwischen den Kurven 50 und 51 verringert sich mit fallender Vor- beziehungsweise Rücklauftemperatur, der Abstand wird im Punkt 62 schließlich null. Der Einfachheit halber sind die Kurven 50 und 51 als stufenweise geknickte Gerade gezeichnet, ohne daß sie zum Punkt 62 hingeführt sind.

Werden die einzelnen Heizkörper, wie in der Regel üblich, durch vorgeschaltete Thermostatventile angedrosselt, so wird eine Vorlauftemperatur nach Maßgabe der Kurve 55 gewählt, um dieses Androsseln zu ermöglichen. Da die Kurve 55 eine höhere Vorlauftemperatur vorgibt, als es eigentlich nach der Kurve 51 vorgesehen ist, liegt auch die sich einstellende Rücklauftemperatur in einer Kurve unterhalb der Kurve 50, um nach oben und unten gleiche Spreizungen bezüglich der Kurve 52 vorzunehmen.

Bei den Diagrammen nach Figur 3 ist gleichfalls von einer Radiatorenanlage ausgegangen worden, die mit einer Vorlauftemperatur von 90°, einer Rücklauftemperatur von 70° und einer Sollraumtemperatur von 20° arbeitet. Der Unterschied zur Figur 2 besteht darin, daß die maximale Anlagenleistung von 100 Prozent nicht einer Außentemperatur von — 20°, sondern einer solchen von — 10° zugeordnet ist. Ansonsten haben die Kurven dieselbe Bedeutung.

Es soll noch in beiden Figuren auf die Kurven 54 und 60 hingewiesen werden, die den Verlauf einer unterschiedlichen Raumtemperatur charakterisieren. Die Kurven kommen jeweils durch Gleichheit gewählter Raumtemperatur, Heizkörperübertemperatur von null und mittlerer Heizkörpertemperatur in gleicher Größe der gewählten Raumtemperatur zustande.

Durch Einschaltung eines der Widerstände 29 bis 32 parallel zum stets eingeschalteten Widerstand 80 durch Einfügen einer der Brücken 27 wird die Außentemperatur festgelegt, bei der die maximale Heizleistung von 100 Prozent erreicht wird. Sind alle Brücken 27 entfernt, also nur der Widerstand 28 eingeschaltet, so ist die maximale Heizleistung der tiefsten Außentemperatur von — 20° zugeordnet. Bei Einschalten des Widerstandes 29 zusätzlich, findet eine Zuordnung von — 18° zu 100 Prozent statt, bei Einschalten des Widerstandes 30 eine Außentemperatur von — 16° zu den erwähnten 100 Prozent und so weiter. Durch Einschaltung der Brücken 27 werden somit jeweils die Punkte 63, 64 und 65 in ihrem Abszissenwert vorverlegt. Der zugehörige Ordinatenwert der Punkte ergibt sich durch eine Verstellung des Schleifers 36 am Trimmwiderstand 35. Der Widerstand 35 beziehungsweise der eingestellte Teilwiderstand wirkt als Gegenkopplung zum Verstärker 18. Je höher der mittels des Schleifers 36 eingestellte Widerstandswert ist, um so kleiner ist die Gegenkopplung, um so höher ist die Ausgangsspannung auf der Leitung 20. Eine Verstellung zu höheren Widerstandswerten bringt somit eine Anhebung des Ordinatenwertes.

Eine Verstellung des Schleifers 15 des Potentiometers 8 bewirkt eine Änderung des Sollwertes der Raumtemperatur, im Ausführungbeispiel war sie für 20° gewählt. Wird eine Schleiferstellung entsprechend einer Raumtemperatur von 25° eingestellt, so wird die für 20° gewählte Vorlauftemperaturkurve 55 parallel zu sich selber entlang der Kurve 54 zu höheren Werten verschoben. Bei einer Absenkung der gewählten Raumtemperatur wird die Kurve 55 parallel zu sich selber zu tieferen Werten verschoben.

Liegt demgemäß die gewählte Kurve der Vorlauftemperatur fest, was die vorgegebene Normaußentemperatur und die Auslegetemperatur (dh. die Außentemperatur, bei der sich die maximale Vorlauftemperatur einstellt ; siehe DIN 4701) aufgrund der gewählten Heizkörper angeht, so findet eine Variation des Vorlauftemperaturwertes nur noch anhand des Meßfühlerwiderstandes 13 statt. Mittels des Meßfühlerwiderstandes 13 wird die Kurve 55 exakt abgefahren, je nach dem Wert der gerade herrschenden Außentemperatur, die auf der Abszisse aufgetragen ist.

Ist demgemäß für ein zu beheizendes Gebäude aufgrund der Wärmebedarfsberechnung die Heizungsanlage bezüglich der Leistung der Wärmequelle und der Größe der Heizkörper ausgewählt worden, so ist es dem Installateur möglich, anhand der tiefsten zu erwartenden Temperatur am Aufstellungsort die Zuordnung der Anlagenleistung zu dieser Außentemperatur durch Einschalten einer der Brücken 27 vorzunehmen. Er kann weiterhin unabhängig davon durch Betätigen des Schleifers 36 die Auslegetemperatur der Anlage einstellen, also, womit er praktisch die Höhe der mittleren Heizkörperübertemperatur beziehungsweise der absoluten Heizkörpertemperatur gegenüber der Raumtemperatur vorgibt und diese der Anlagebelastung zuordnet. Der Benutzer kann dann durch Wahl der ihm genehmen Raumtemperatur durch Verstellen lediglich des Schleifers 15 seinen individuellen Wünschen Rechnung tragen.

Beim Stand der Technik war es so, daß der Installateur nach der Montage der Heizung vorher in ihrem Verlauf festgelegte Heizkurven mit einem Schalter auswählen mußte. Das hieß also, daß ausprobiert wurde, welche Heizkurve dem Benutzer am angenehmsten erschien. Durch die Erfindung ist es möglich, Normwerte einzustellen und die Komfortwahl dem Kunden zu überlassen. Hierbei ist es möglich, die Bewegung des Schleifers 15 in Graden der Raumtemperatur zu kalibrieren. Gleiches ist beim Schleifer 36 möglich, der in Graden der gewünschten Vorlauftemperatur kalibriert würde. Es muß allerdings darauf hingewiesen werden, daß die Einstellung des Schleifers 36 bezüglich der ihm zugehörigen Skala für eine Normraumtemperatur von 20 °C gilt.

## Patentansprüche

1. Sollwertgeber für einen Temperaturregler einer Wärmequelle für eine Gebäudeheizung mit einer Brückenschaltung, deren einer Ast einen Sollwertwiderstand (7, 8, 9) für eine gewünschte Raumtemperatur und deren anderer Ast einen außentemperaturabhängigen Widerstand (13) und einen Festwertwiderstand (14) in Serie liegend aufweist, und bei dem die Brückendiagonale aus dem Schleifer (15) des Sollwertwiderstandes und der Verbindung (21) des außentemperaturabhängigen Widerstandes mit dem Festwertwiderstand gebildet und auf einen Verstärker (18) gegeben ist, an dessen Ausgang der Regler für die Wärmequelle liegt, dadurch gekennzeichnet, daß der Verbindungspunkt (21) zwischen dem außentemperaturabhängigen Widerstand (13) und dem Festwertwiderstand (14) unter Einschaltung eines einer Normaußentemperatur äquivalenten Widerstandes (28-32) mit dem Verstärker (18) verbunden ist und daß parallel zum Verstärker (18) ein Trimmwiderstand (35) liegt, dessen eingestellter Wert ein Bild der Auslegetemperatur der Heizungsanlage ist.

2. Sollwertgeber nach Anspruch 1, dadurch gekennzeichnet, daß der Widerstand (35) als Potentiometer ausgebildet ist, dessen Widerstandskörper vom Ausgang (19) des Verstärkers (18) zum invertierenden Eingang (34) gelegt ist.

3. Sollwertgeber nach Anspruch 1 oder 2, dadurch gekennzeichnet, daß in der Leitung vom Verbindungspunkt (21) zu dem einer Normaußentemperatur äquivalenten Widerstand (28-32) ein zweiter Verstärker (24) eingefügt ist.

4. Sollwertgeber nach Anspruch 3, dadurch gekennzeichnet, daß der invertierende Eingang (42) des zweiten Verstärkers (24) über einen Festwertwiderstand (38) mit dem einen Pol der Betriebsspannung (2) und über einen weiteren Festwertwiderstand (39) mit seinem Ausgang (25) verbunden ist.

5. Sollwertgeber nach einem der Ansprüche 1 bis 4, dadurch gekennzeichnet, daß der nicht invertierende Eingang (17) des ersten Verstärkers (18) über eine Leitung mit dem Schleifer 15 des Widerstandes 8 verbunden ist.

6. Sollwertgeber nach einem der Ansprüche 3 bis 5, dadurch gekennzeichnet, daß der Ausgang (25) des Verstärkers (24) an dem der Normaußentemperatur äquivalenten Widerstand (28) bis (32) angeschlossen ist.

## Claims

1. A set point adjuster for a temperature controller for a heat source of a heating system for a building, comprising a bridge circuit, one branch of which includes a desired-value resistor (7, 8, 9) for selecting a desired room temperature whereas the other branch includes a series connection of a resistor (13) that is dependent on the outdoor temperature and of a fixed resistor (14), and the detector diagonal of the bridge comprises the slider (15) of the desired-value resistor and the junction (21) between the resistor that is dependent on the outdoor temperature and the fixed resistor and is coupled to an amplifier (18), the output of which is connected to the controller for the heat source, characterized in that the junction (21) between the resistor (13) that is dependent on the outdoor temperature and the fixed resistor (14) is connected to the amplifier (18) via a resistor (28 to 32) which is equivalent to a standard outdoor temperature, and a trimmer resistor (35) is connected in parallel to the amplifier (18) and is adjusted to a value which represents the temperature for which the heating system is designed.

2. A set point adjuster according to claim 1, characterized in that the resistor (35) consists of a potentiometer, the resistor body of which is connected between the output (19) of the amplifier (18) and the inverting input (34) thereof.

3. A set point adjuster according to claim 1 or 2, characterized in that a second amplifier (24) is included in the line extending from the junction (21) to the resistor (28 to 32) which is equivalent to a standard outdoor temperature.

4. A set point adjuster according to claim 3, characterized in that the inverting input (42) of the second amplifier (24) is connected via a fixed resistor (38) to one input terminal (2) for the operating voltage and is connected via another fixed resistor (39) to the output (25) of the second amplifier.

5. A set point adjuster according to any of claims 1 to 4, characterized in that the noninverting input (17) of the first amplifier (18) is connected via a line to the slider (15) of the resistor (8).

6. A set point adjuster according to any of claims 3 to 5, characterized in that the output (25) of the amplifier (24) is connected to the resistor (28 to 32) which is equivalent to the standard outdoor temperature.

**Revendications**

1. Générateur de signaux de consigne pour un régulateur de température d'une source calorifique destinée au chauffage d'un bâtiment, avec un montage en pont dont l'une branche comporte un rhéostat de réglage (7, 8, 9) pour une température intérieure voulue, et l'autre branche, une résistance (13) dépendant de la température extérieure, et une résistance fixe (14), montées en série, la diagonale du pont étant réalisée par le curseur (15) du rhéostat et la connexion (21) entre la résistance dépendant de la température extérieure et la résistance fixe, et appliquée à un amplificateur (18) à la sortie duquel est raccordé le régulateur de la source calorifique, caractérisé par le fait que le point de branchement (21) entre la résistance (13) et la résistance (14) est relié à l'amplificateur (18), par l'intermédiaire d'une résistance (28-32) équivalente à une température extérieure standard, et que parallèlement à l'amplificateur (18) est prévue une résistance de réglage (35) dont la valeur de réglage reflète la température pour laquelle l'installation de chauffage est conçue.

2. Générateur de signaux de consigne suivant la revendication 1, caractérisé par le fait que la résistance (35) est conçue comme potentiomètre dont le corps de résistance s'étend de la sortie (19) de l'amplificateur (18) à l'entrée inverseuse (34).

3. Générateur de signaux de consigne suivant la revendication 1 ou 2, caractérisé par le fait qu'il est disposé sur la ligne reliant le point de branchement (21) à la résistance (28-32) équivalente à une température extérieure standard, un deuxième amplificateur (24).

4. Générateur de signaux de consigne suivant la revendication 3, caractérisé par le fait que l'entrée inverseuse (42) du deuxième amplificateur (24) est reliée, par l'intermédiaire d'une résistance fixe (38), à l'un des pôles de la tension de service (2), et, par l'intermédiaire d'une autre résistance fixe (39), à la sortie (25) de l'amplificateur.

5. Générateur de signaux de consigne suivant l'une des revendications 1 à 4, caractérisé par le fait que l'entrée directe (17) du premier amplificateur (18) est reliée par une ligne au curseur (15) de la résistance (8).

6. Générateur de signaux de consigne suivant l'une des revendications 3 à 5, caractérisé par le fait que la sortie (25) de l'amplificateur (24) est reliée à la résistance (28) à (32) équivalente à la température extérieure standard.

Figur 1

0 089 567

## Figur 2

**0 089 567**

## Figur 3